# EUROPEAN PATENT APPLICATION

(11) **EP 4 429 102 A1**
(43) Date of publication of application: **11.09.2024**
(21) Application number: 22889506.6
(22) Date of filing: 28.10.2022
(51) Int. Cl.: H02S 20/32, F24S 30/425, F24S 50/80

(54) **SINGLE-ROW SOLAR TRACKER**

(30) Priority: 05.11.2021 ES 202132186 U
(71) Applicant: Trina Solar Spain, S.L.U., 28050 Madrid (ES)
(72) Inventor: GOMEZ GARCIA, Juan Manuel, 28050 Madrid (ES); CORDOBA DE SAMANIEGO GARCIA, Abel, 28050 Madrid (ES); CASIS MARTINEZ, Fabián, 28050 Madrid (ES); SAN FRANCISCO SANZ, Sergio, 28050 Madrid (ES)
(74) Representative: Cabinet Beau de Loménie
(86) International application number: PCT/ES2022/070697
(87) International publication number: WO 2023/079200

(57) **Abstract**

The present invention relates to a single-row solar tracker comprising a rotation shaft (1) on which solar panels (2) are mounted so that they rotate according to a controlled angle, the rotation shaft (1) resting on a plurality of supporting masts, with driving masts (3.1) optionally combined with standard masts (3.2), and comprising a linear actuator (4) in each driving mast (3.1) which propels a lever (4.1) connected to the rotation shaft (1) causing same to rotate, the lower end (4.3) of the linear actuator (4) being linked through a joint (4.4) to the driving mast (3.1); and each linear actuator (4) is activated by a corresponding motor (5), the solar tracker comprising a control system that simultaneously activates each motor (5) so that all the solar panels (2) maintain the same orientation.

## Description

### Technical field

The present invention relates to the solar energy sector, more specifically to a solar tracker and its drive, among those solar trackers intended to support solar panels with a rotation shaft and having a long single row per drive, reducing or eliminating the torsional stresses produced on the torsion of the rotation shaft.

### State of the art

Solar trackers change their orientation throughout the day so that the normal to the surface of the solar panels coincides at all times with the local meridian containing the sun and thus maximizes energy capture. In particular, single-shaft or single-row solar trackers rotate the panels around a single rotation shaft.

Currently, there are known solutions in which, in order to drive the rotation for positioning the panels, for example, a single motor connected to the rotation shaft positioned at one of the ends or in a central position is used with sufficient force to rotate the shaft and all the panels. To correctly rotate the rotation shaft, the supporting masts on which the rotation shaft rests to support the panels must comprise bushings or bearings that allow rotation.

However, this solution requires larger sizing of the torsion shaft that withstands the highest torsion values, in addition to a high-power motor to move the entire rotation shaft together with the panels, which considerably increases the costs of the installation. Furthermore, even with such sizing, losses may occur along the shaft due to the torsion and/or resistance of the connected elements, thus resulting in uneven rotation of the shaft.

To solve this matter, there are solutions where the supporting masts are divided into driving masts interspersed with standard masts. Actuators are arranged in said driving masts so that a motor powers an actuator and transmits the movement to the remaining actuators through an auxiliary transmission bar so that the generated torsional forces are reduced. However, in solutions of this type, losses can also be generated due to the different connections that cause an uneven rotation by the different actuators, and in this case torsion occurs on the main rotation shaft, giving rise in extreme cases to different angulations of the panels between ends.

In view of the described drawbacks of the currently existing solutions, it is clear that a solution is needed which prevents the torsional stresses generated on the shaft, which reduce the performance of the panels or shorten the useful life of the installation.

### Object of the invention

In order to achieve this objective and solve the technical problems discussed so far, in addition to providing additional advantages that can be derived later, the present invention relates to a single-row solar tracker comprising a rotation shaft on which the solar panels are mounted so that they rotate according to a controlled angle, the rotation shaft resting on a plurality of supporting masts, with driving masts optionally combined with standard masts, in other words, the driving masts are those that drive the rotation of the tracker and therefore comprise a motor, where all of the supporting masts can be driving masts or are combined with standard non-driving masts that only serve as support. The solar tracker comprising an actuator in each driving mast which propels a lever (bar, or similar element) connected to the rotation shaft causing same to rotate and consequently the tracker to rotate, the lower end of the linear actuator being linked through a joint to the driving mast. Each linear actuator is activated by a corresponding motor, the solar tracker comprising a control system that simultaneously activates each motor so that all the solar panels maintain the same orientation.

Given this configuration, all the motors have a synchronization to produce the same rotation at the same moment, and having a linear actuator in each driving mast that will apply the movement. Said linear actuator can be selected between a linear actuator that is electric, hydraulic, etc. This system achieves increased performance since there are no losses due to mechanical friction (produced by the transmission bar, cardan joint, etc.), resulting in a simpler installation that is easier to assemble than in the case of solutions having a transmission bar. Furthermore, it allows the tracker to be sized so that the rotation shaft can have a smaller section since it has to support less stress, and consequently the supporting masts will also be sized with a smaller section since they have to support less weight. In turn, the linear actuators will require smaller sizing as they have an independent electric motor for each one of them.

Therefore, the tracker is optimized since it weighs less, which has a direct impact on better transportation since weight and volume are reduced.

The control system for the simultaneous orientation of all the panels by means of linear actuators comprises a central control unit that activates all the motors of the linear actuators.

According to an alternative embodiment, it is envisaged that the control system comprises a control unit for each motor, with a master control unit that sends the signal to the remaining slave control units to activate the motors.

The fact that the motors are independent allows greater control of their rotation, being able to know or control their movement in the same way. On the other hand, synchronization allows relieving torsional stresses that may occur on the main shaft due to the difference in angular speed of the motors or their angular position; since exactly the same displacement is carried out, each one guided by its motor and controller, torsion is not produced on the shaft between masts or support points.

Likewise, it improves the scalability or modularity of the installation, since it allows the length of the tracker to be reduced or extended, depending on the needs of the installation.

According to another aspect of the invention, communication between the control system and the motors, or between the individual controllers of each motor that drive each of the linear actuators, is carried out through existing or additional wiring and/or wireless means, such as Bluetooth, LoRa, Zigbee or via WI-FI.

Preferably, the control unit is configured to activate the motors of the actuators based on a signal received from the motor or from sensors installed in each of the actuators. In this way, both optimal synchronization of the linear actuators and a failure detection capacity are achieved that prevent rotation from being activated in the event of breakage or failure of the tracker or of one of the motors, where the controllers are capable of detecting said failure and stopping the system so that no damage occurs to the tracker.

Additionally, the control unit is configured to regulate the speed of the motors so that the panels move synchronously. In this way, the motors are controlled according to the environmental conditions so that the rotation shaft rotates evenly.

This configuration can also be implemented with more than one row of solar panels working in parallel.

### Description of the figures

Figure 1 shows a top view of the solar tracker which shows all the solar panels arranged on the rotation shaft.
Figure 2 shows an elevation view of the solar tracker in figure 1 which shows the panels supported on the masts, where some masts are driving masts and others are standard supporting masts.
Figure 3 shows a profile view of the tracker which shows one of the driving masts with its corresponding linear actuator in a mid-position.
Figure 4 shows a profile view of the tracker which shows one of the driving masts with its corresponding linear actuator in an extended position.
Figure 5 shows a detailed elevation view of one of the linear actuators and its drive motor.
Figure 6 schematically shows the control system with a central control unit.
Figure 7 schematically shows the control system with a control unit for each motor.

### Detailed description of the invention

In light of the aforementioned figures, and in accordance with the adopted numbering, one may observe therein a preferred exemplary embodiment of the invention, which comprises the parts and elements indicated and described in detail below.

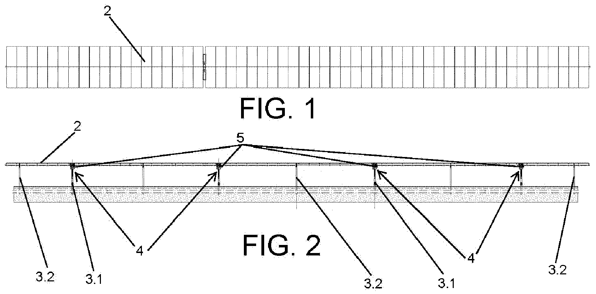

Figure 1 shows a solar installation having solar panels (2), in this case corresponding to a single-row tracker object of the invention.

As shown in figure 2, this type of tracker comprises supporting masts, preferably equidistant to support the solar panels (2) that are mounted with their corresponding frame and straps on a rotation shaft (1) that extends along the entire length of the panels (2). As such, the rotation shaft (1) rests on said masts being divided between driving masts (3.1) comprising a linear actuator (4) to drive the rotation of the rotation shaft (1) for orienting the panels (2), and intermediate standard masts (3.2) only serving as support without applying torsion to the rotation shaft (1), where there may be other design options in which there are no standard masts (3.2) and they are all driving masts (3.1).

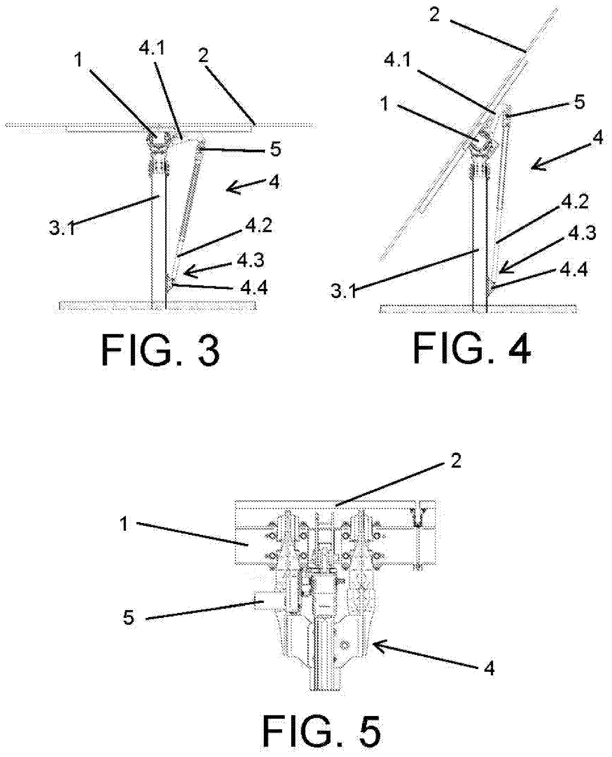

As shown in figures 3 and 4, these linear actuators (4) are electric linear actuators, but they can have any other configuration, such as hydraulic actuators. The tracker comprises a lever (4.1) connected to the upper portion of the linear actuator (4) that applies rotation on the rotation shaft (1) due to the action of a rod (4.2) driven for the example shown by means of a spindle driven by a motor (5) installed on said linear actuator (4) as shown in the detail of figure 5. In this way, when the motor (5) drives the linear actuator (4), the rod (4.2) thereof displaces, pivoting the lever (4.1) that causes a controlled rotation of the rotation shaft to which it is connected, based on the orientation of the solar panel (2) to be achieved.

Said linear actuator (4) is fixed with its lower end (4.3) to the driving mast (3.1) by means of a joint (4.4).

The solar tracker of the invention further comprises a control system that is configured to send a signal so that all the motors (5) are activated simultaneously. In this way, the motors (5) drive the actuators (4) to apply rotation on the rotation shaft (1) at the same instant so that the solar panels (4) move in unison, preventing unwanted torsion along the rotation shaft (1).

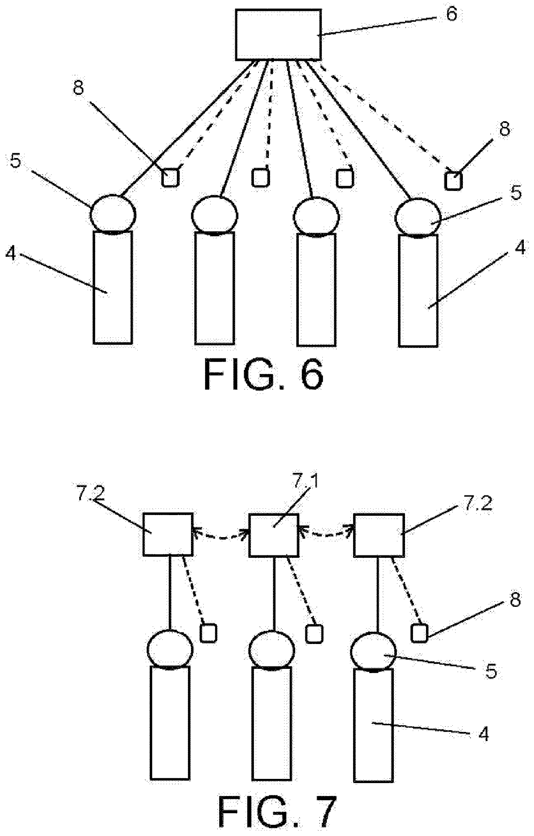

According to a preferred embodiment, as detailed in figure 6, the control system comprises a single central control unit (6) that activates the motors (5) of each linear actuator (4).

According to an alternative design embodiment, as detailed in figure 7, it is envisaged that the control system comprises a control unit for each of the motors (5), with a master control unit (7.1), where the remaining units are slave control units (7.2), so that they are in communication with each other and the master control unit (7.1) sends a signal to the slave control units (7.2) that act to synchronize with the master control unit (7.2), making all the panels displace simultaneously.

This communication between the central control unit (6) and the motors (5), and the communication between the control units (7.1, 7.2) among themselves and with the motors (5), is preferably established by existing or additional wiring and/or by wireless means, such as WI-FI, LoRa, Zigbee or Bluetooth.

According to a preferred option of the invention, the control system is configured to send the activation signal of the motors (5) for actuating the linear actuators (4) based on a signal received from the motor or motors (5) and/or from sensors (8) installed in each of the linear actuators (4).

Furthermore, according to another aspect of the invention, the control system is configured to regulate the speed of the motors (5) so that the panels (2) move synchronously. In this way, at the time of sending the synchronized activation signal of the motors (5), based on the environmental conditions, such as greater wind on some panels (2) than on others, the control unit will regulate the speeds of the motors (5) so that rotation along the rotation shaft (1) is even.

Therefore, a solar tracker is obtained that gives the installation greater control over the rotation of the panels (2), preventing unwanted torsion on the rotation shaft (1) that could lead to different torsions between solar panels (2) or deterioration of the installation.

## Claims

1. A single-row solar tracker comprising a rotation shaft (1) on which solar panels (2) are mounted so that they rotate according to a controlled angle, the rotation shaft (1) resting on a plurality of supporting masts, with driving masts (3.1) optionally combined with standard masts (3.2), **characterized in that** it comprises a linear actuator (4) in each driving mast (3.1) which propels a lever (4.1) connected to the rotation shaft (1) causing same to rotate, the lower end (4.3) of the linear actuator (4) being linked through a joint (4.4) to the driving mast (3.1); and **in that** each linear actuator (4) is activated by a corresponding motor (5), the solar tracker comprising a control system that simultaneously activates each motor (5) so that all the solar panels (2) maintain the same orientation.

2. The solar tracker according to claim 1, **characterized in that** the control system comprises a central control unit (6) that activates all the motors (5).

3. The solar tracker according to claim 1, **characterized in that** the control system comprises a control unit for each motor (5), comprising a master control unit (7.1) and the remaining units are slave control units (7.2), where the master control unit (7.1) sends the activation signal to the slave control units (7.2) to activate the motors (5).

4. The solar tracker according to any one of the preceding claims, **characterized in that** communication between the control system and the motors (5) and/or communication between the control units (7.1, 7.2) so that the motors (5) are activated simultaneously is carried out through wiring and/or wireless means.

5. The solar tracker according to any one of the preceding claims, **characterized in that** the control system is configured to activate the motors (5) of the linear actuators (4) based on a signal received from one or more motors (5) and/or from sensors (8) installed in each of the linear actuators (4).

6. The solar tracker according to any one of the preceding claims, **characterized in that** the control system is configured to regulate the speed of the motors (5) so that the panels (2) move synchronously.
